# EUROPEAN PATENT SPECIFICATION

(11) **EP 2 400 044 B1**
(45) Date of publication and mention of the grant of the patent: **07.09.2016**
(21) Application number: 10743545.5
(22) Date of filing: 16.02.2010
(51) Int. Cl.: C25D 11/12, C25D 11/24, C25D 17/10, C25D 11/04, G02B 1/11

(54) **METHOD FOR PRODUCING MOLD**
VERFAHREN ZUR HERSTELLUNG EINER FORM
PROCÉDÉ DE FABRICATION D'UN MOULE

(30) Priority: 17.02.2009 JP 2009034148
(43) Date of publication of application: 28.12.2011
(73) Proprietor: Sharp Kabushiki Kaisha, Osaka-shi, Osaka 545-8522 (JP)
(72) Inventor: Isurugi, Akinobu, Osaka-shi, Osaka 545-8522 (JP); Minoura, Kiyoshi, Osaka-shi, Osaka 545-8522 (JP)
(74) Representative: Müller Hoffmann & Partner
(86) International application number: PCT/JP2010/000937
(87) International publication number: WO 2010/095415

(56) References cited:
- EP-A2- 1 643 546
- WO-A1-2008/001847
- JP-A- 2004 218 011
- US-A- 5 494 713
- US-A1- 2003 121 790

## Description

### TECHNICAL FIELD

The present invention relates to a method of fabricating a mold and an electrode structure for use in the method and, specifically, to a method of fabricating a mold by means of anodization. In this specification, the "mold" includes molds that are for use in various processing methods (stamping and casting), and is sometimes referred to as a stamper. The mold can also be used for printing (including nanoprinting).

### BACKGROUND ART

Display devices for use in TVs, cell phones, etc., and optical elements, such as camera lenses, etc., usually adopt an antireflection technique in order to reduce the surface reflection and increase the amount of light transmitted therethrough. This is because, when light is transmitted through the interface between media of different refractive indices, e.g., when light is incident on the interface between air and glass, the amount of transmitted light decreases due to, for example, Fresnel reflection, thus deteriorating the visibility.

An antireflection technique which has been receiving attention in recent years is forming over a substrate surface a very small uneven pattern in which the interval of recessed portions or raised portions is not more than the wavelength of visible light (λ=380 nm to 780 nm). See Patent Documents 1 to 4. The two-dimensional size of a raised portion of an uneven pattern which performs an antireflection function is not less than 10 nm and less than 500 nm.

This method utilizes the principles of a so-called motheye structure. The refractive index for light that is incident on the substrate is continuously changed along the depth direction of the recessed portions or raised portions, from the refractive index of a medium on which the light is incident to the refractive index of the substrate, whereby reflection of a wavelength band that is subject to antireflection is prevented.

The motheye structure is advantageous in that it is capable of performing an antireflection function with small incident angle dependence over a wide wavelength band, as well as that it is applicable to a number of materials, and that an uneven pattern can be directly formed in a substrate. As such, a high-performance antireflection film (or antireflection surface) can be provided at a low cost.

As the method of forming a motheye structure, using an anodized porous alumina layer which is obtained by means of anodization (or "anodic oxidation") of aluminum has been receiving attention (Patent Documents 2 to 4).

Now, the anodized porous alumina layer which is obtained by means of anodization of aluminum is briefly described. Conventionally, a method of forming a porous structure by means of anodization has been receiving attention as a simple method for making nanometer-scale micropores (very small recessed portions) in the shape of a circular column in a regular arrangement. An aluminum base is immersed in an acidic electrolytic solution of sulfuric acid, oxalic acid, phosphoric acid, or the like, or an alkaline electrolytic solution, and this is used as an anode in application of a voltage, which causes oxidation and dissolution. The oxidation and the dissolution concurrently advance over a surface of the aluminum base to form an oxide film which has micropores over its surface. The micropores, which are in the shape of a circular column, are oriented vertical to the oxide film and exhibit a self-organized regularity under certain conditions (voltage, electrolyte type, temperature, etc.). Thus, this anodized porous alumina layer is expected to be applied to a wide variety of functional materials.

A porous alumina layer fabricated under specific conditions includes cells in the shape of a generally regular hexagon which are in a closest packed two-dimensional arrangement when seen in a direction perpendicular to the film surface. Each of the cells has a micropore at its center. The arrangement of the micropores is periodic. The cells are formed as a result of local dissolution and growth of a coating. The dissolution and growth of the coating concurrently advance at the bottom of the micropores which is referred to as a barrier layer. As known, the size of the cells, i.e., the interval between adjacent micropores (the distance between the centers), is approximately twice the thickness of the barrier layer, and is approximately proportional to the voltage that is applied during the anodization. It is also known that the diameter of the micropores depends on the type, concentration, temperature, etc., of the electrolytic solution but is, usually, about 1/3 of the size of the cells (the length of the longest diagonal of the cell when seen in a direction vertical to the film surface). Such micropores of the porous alumina may constitute an arrangement which has a high regularity (periodicity) under specific conditions, an arrangement with a regularity degraded to some extent depending on the conditions, or an irregular (non-periodic) arrangement.

Patent Document 2 discloses a method of producing an antireflection film (antireflection surface) with the use of a stamper which has an anodized porous alumina film over its surface.

Patent Document 3 discloses the technique of forming tapered recesses with continuously changing pore diameters by repeating anodization of aluminum and a pore diameter increasing process.

The present applicant discloses in Patent Document 4 the technique of forming an antireflection film with the use of an alumina layer in which very small recessed portions have stepped side surfaces.

As described in Patent Documents 1, 2, and 4, by providing an uneven structure (macro structure) which is greater than a motheye structure (micro structure) in addition to the motheye structure, the antireflection film (antireflection surface) can be provided with an antiglare function. The two-dimensional size of a raised portion of the uneven structure which is capable of performing the antiglare function is not less than 1 µm and less than 100 µm. The entire disclosures of Patent Documents 1, 2, and 4 are herein incorporated by reference.

Utilizing such an anodized porous aluminum film can facilitate the fabrication of a mold which is used for formation of a motheye structure over a surface (hereinafter, "motheye mold"). In particular, as described in Patent Documents 2 and 4, when the surface of the anodized aluminum film as formed is used as a mold without any modification, a large effect of reducing the manufacturing cost is achieved. The structure of the surface of a motheye mold which is capable of forming a motheye structure is herein referred to as "inverted motheye structure".

EP1643546 discloses the repeated anodisation and etching of an aluminium structure.

### CITATION LIST

### PATENT LITERATURE

Patent Document 1: Japanese PCT National Phase Laid-Open Publication No. 2001-517319
Patent Document 2: Japanese PCT National Phase Laid-Open Publication No. 2003-531962
Patent Document 3: Japanese Laid-Open Patent Publication

### SUMMARY OF INVENTION

### TECHNICAL PROBLEM

The present inventors conducted researches and found that, in a motheye mold fabrication method which includes the process of alternately repeating an anodization step and an etching step (e.g., Patent Documents 2 and 4), a defect may be formed, such as a hole in an anodized porous alumina film which is larger than a recessed portion that is part of an inverted motheye structure (and that has a two-dimensional size of not less than 10 nm and less than 500 nm).

In the case of a bulk of an aluminum material, production of this defect is recognized as being attributed to formation of a local cell in an etchant due to an impurity element contained in an aluminum film, which as a result causes nonuniform corrosion, such as pitting corrosion or crevice corrosion. Therefore, using aluminum with sufficiently high purity (e.g., 99.99 mass% (or "4N")) can prevent production of the above defect.

However, according to the experiments conducted by the present inventors, it was found that a defect such as described above may sometimes be produced in the case of a high-purity aluminum film which is formed on a glass substrate using a thin film deposition technique.

The present invention was conceived for the purpose of solving the above problems. One of the major objects of the present invention is to prevent production of a defect which is attributed to nonuniform corrosion in a motheye mold fabrication method which includes the process of alternately repeating an anodization step and an etching step.

### SOLUTION TO PROBLEM

The object is solved by a method according to claim 1.

A mold fabrication method of the present invention is a method of fabricating a mold that has an inverted motheye structure in its surface, the inverted motheye structure having a plurality of recessed portions whose two-dimensional size viewed in a direction normal to the surface is not less than 10 nm and less than 500 nm, the method including the steps of: (a) anodizing a surface of an aluminum film or aluminum base via an electrode that is in contact with the surface, thereby forming a porous alumina layer which has a plurality of very small recessed portions; (b) after step (a), allowing the porous alumina layer to be in contact with an etchant, thereby enlarging the plurality of very small recessed portions of the porous alumina layer; and (c) after step (b), further anodizing the surface via the electrode to grow the plurality of very small recessed portions, wherein step (b) is performed in such a controlled state that part of the electrode which is in contact with the surface in the etchant would not be exposed to the etchant. Here, the "controlled state that part of the electrode which is in contact with the surface would not be exposed to the etchant" includes not only (1) a state where part of the electrode which is in contact with the surface is protected by a protection member, such as an O-ring, so as not to be exposed to the etchant, but also (2) a controlled state where part of the electrode which is in contact with the surface does not exist in the etchant (i.e., a state where the electrode is not in contact with the surface in the etchant).

In one embodiment, step (b) is performed with the electrode being fixed in the etchant so as not to come into contact with the surface.

In one embodiment, step (a) is performed with part of the electrode which is in contact with the surface being protected by a protection member so as not to be exposed to the electrolytic solution, and step (b) is performed with the part of the electrode which is protected so as not to be exposed to the electrolytic solution in step (a) being fixed so as to be spaced away from the surface in the etchant.

In one embodiment, step (b) is performed with the part of the electrode which is in contact with the surface being fixed so as not to be exposed to the etchant in the etchant.

In one embodiment, the electrode is made of aluminum which has a lower purity than the aluminum film or the aluminum base.

Another mold fabrication method of the present invention is a method of fabricating a mold that has an inverted motheye structure in its surface, the inverted motheye structure having a plurality of recessed portions whose two-dimensional size viewed in a direction normal to the surface is not less than 10 nm and less than 500 nm, the method including the steps of: (a) anodizing a surface of an aluminum film or aluminum base via an electrode that is in contact with the surface, thereby forming a porous alumina layer which has a plurality of very small recessed portions; (b) after step (a), allowing the porous alumina layer to be in contact with an etchant, thereby enlarging the plurality of very small recessed portions of the porous alumina layer; and (c) after step (b), further anodizing the surface via the electrode to grow the plurality of very small recessed portions, wherein in step (b), part of the electrode which is in contact with the surface in the etchant is made of aluminum whose purity is 99.99 mass% or higher or a metal whose standard electrode potential is lower than that of aluminum.

In one embodiment, the part of the electrode is reinforced with a reinforcement member, and a surface of the reinforcement member which is to come into contact with the etchant in step (b) is made of a resin.

An electrode structure is an electrode structure for use in any of the above-described mold fabrication methods, including: the electrode which has an elevated portion that is made of aluminum or a metal whose standard electrode potential is lower than that of aluminum; a mechanism of pressing the elevated portion of the electrode against the surface of the aluminum film or the aluminum base; and a protection member arranged to surround a perimeter of the elevated portion of the electrode, the protection member being in contact with the surface even when the elevated portion is not in contact with the surface such that a gap between the surface and the elevated portion can be tightly closed.

In one embodiment, the elevated portion is made of aluminum whose purity is lower than that of the aluminum film or the aluminum base.

### ADVANTAGEOUS EFFECTS OF INVENTION

According to the present invention, in a motheye mold fabrication method which includes the process of alternately repeating an anodization step and an etching step, production of a defect which is attributed to nonuniform corrosion can be prevented.

### BRIEF DESCRIPTION OF DRAWINGS

[FIG. **1**] Diagrams for illustrating a conventional method of fabricating a motheye mold. **(a)** is a schematic view which illustrates an anodization step. **(b)** is a schematic view which illustrates an etching step.
[FIG. **2**] **(a)** is a schematic cross-sectional view of a motheye mold **90A**. **(b)** shows a cross-sectional SEM image of the motheye mold **90A**.
[FIG. **3**] A schematic diagram for illustrating a cause of nonuniform corrosion in the etching step.
[FIG. **4**] SEM images of the surfaces of anodized porous alumina films which have an inverted motheye structure. **(a)** shows a SEM image of the surface of a film with no defect. **(b)** shows a SEM image of the surface of a film in which defects (black spots) were produced.
[FIG. **5**] A schematic diagram for illustrating the etching step in which nonuniform corrosion would not occur.
[FIG. **6**] **(a)** is a diagram schematically showing a cross-sectional structure of an electrode structure **30A** for use in a method of fabricating a motheye mold (a form of the electrode structure **30A** when used in the anodization step) according to an embodiment of the present invention. **(b)** is a schematic perspective view showing the relationship between the electrode structure **30A** and a sample (aluminum film **10a**).
[FIG. **7**] A cross-sectional view schematically showing a form of the electrode structure **30A** shown in FIG. **6** when used in the etchant.
[FIG. **8**] **(a)** is a diagram schematically showing a cross-sectional structure of an electrode structure **30B** for use in a method of fabricating a motheye mold according to another embodiment of the present invention. **(b)** is a schematic perspective view showing the relationship between the electrode structure **30B** and a sample (aluminum film **10a** and glass substrate **10b**).
[FIG. **9**] **(a)** is a schematic perspective view showing a form of the electrode structure **30B** when used in the anodization step. **(b)** is a schematic perspective view showing a form of the electrode structure **30B** when used in the etching step.
[FIG. **10**] **(a)** is a schematic cross-sectional view showing a form of an electrode structure **30C** for use in a method of fabricating a motheye mold when used in the anodization step. **(b)** is a schematic cross-sectional view showing a form of the electrode structure **30C** when used in the etching step.
[FIG. **11**] **(a)** is a diagram schematically showing a cross-sectional structure of an electrode structure **30D** for use in a method of fabricating a motheye mold. **(b)** is a schematic perspective view showing the relationship between the electrode structure **30D** and a sample (aluminum film **10a**).
[FIG. **12**] **(a)** is a diagram schematically showing a cross-sectional structure of an electrode structure **30E** for use in a method of fabricating a motheye mold according to still another embodiment of the present invention. **(b)** is a schematic perspective view showing the relationship between the electrode structure **30E** and a sample (aluminum film **10a**).
[FIG. **13**] **(a)** is a diagram schematically showing a cross-sectional structure of an electrode structure **30F** for use in a method of fabricating a motheye mold according to still another embodiment of the present invention. **(b)** is a schematic perspective view showing the relationship between the electrode structure **30F** and a sample (aluminum film **10a**).

### DESCRIPTION OF EMBODIMENTS

Hereinafter, a method of fabricating a motheye mold and an electrode structure for use in the method according to an embodiment of the present invention are described with reference to the drawings. Note that the present invention is not limited to embodiments which will be described below.

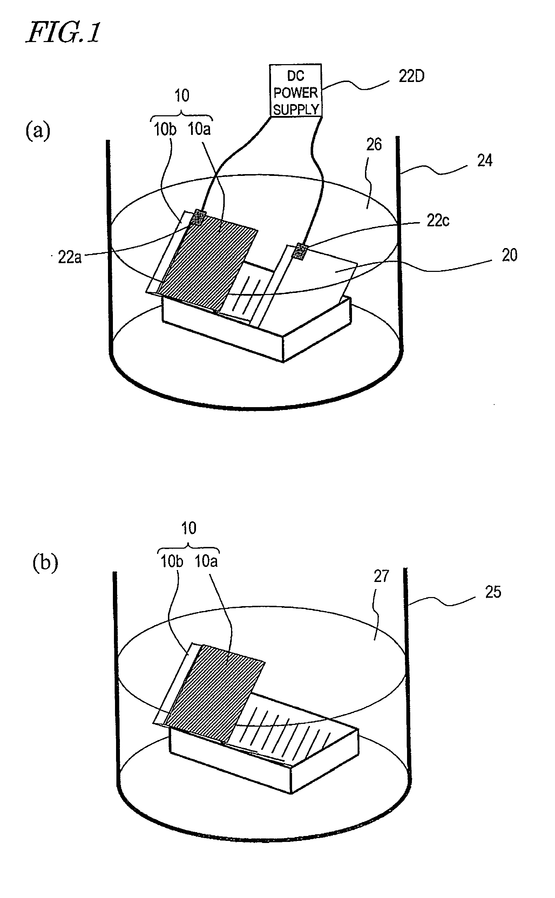

First, a conventional method of fabricating a motheye mold, including the process of alternately repeating an anodization step and an etching step, is described with reference to FIGS. **1(a)** and **1(b)**. In the example described herein, an aluminum film is used which has been formed over a base (e.g., glass substrate) using a thin film deposition technique. The embodiment of the present invention is also applicable to a bulk of an aluminum material.

FIG. **1(a)** is a schematic view illustrating the anodization step in the conventional motheye mold fabrication method. FIG. **1(b)** is a schematic view illustrating the etching step.

First, as the base, a sample **10** was provided which was formed by depositing a 1.0 µm thick aluminum film **10a** by sputtering over a square glass substrate **10b**, each side of which was 5 cm. Note that, here, an aluminum target with a purity of 99.999 mass% (5N) or higher was used, and therefore, the obtained aluminum film **10a** had a purity of 5N of higher.

Then, as shown in FIG. **1(a)**, anodization was performed with the sample **10** being held standing in an electrolytic solution **26** in a container **24** with the use of a plastic jig such that a diagonal direction of the sample **10** was coincident with the vertical direction. An electrode **22a** that was in contact with the aluminum film **10a** was coupled to the positive electrode of an external DC power supply **22D** via a lead wire. The negative electrode used in the anodization step was a platinum-plated tantalum plate **20** which had approximately the same size as the sample **10**. An electrode **22c** that was in contact with the tantalum plate **20** was coupled to the negative electrode of the external DC power supply **22D** via another lead wire. The electrolytic solution **26** used herein was a 0.6 mass% oxalic aqueous solution at 5°C. The anodization was performed with an applied voltage at 80 V for 25 seconds.

Thereafter, as shown in FIG. **1(b)**, the sample **10** was immersed in an etchant **27** (here, a 1 mol% phosphoric aqueous solution) at 30°C in a container **25** for 25 minutes, whereby the porous alumina layer obtained by the anodization was etched. This etching enlarged very small recessed portions of the porous alumina layer. The above-described anodization step and etching step were alternately performed through 5 cycles (including 5 cycles of the anodization step and 4 cycles of the etching step).

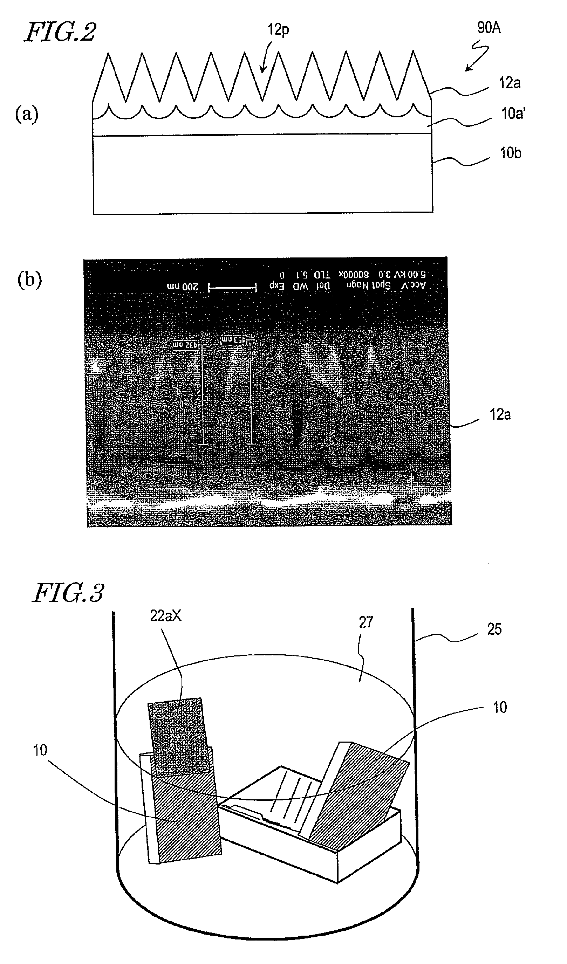

FIG. **2(a)** shows a schematic cross-sectional view of the obtained motheye mold **90A**. FIG. **2(b)** shows a cross-sectional SEM image of the motheye mold **90A**.

As seen from FIGS. **2 (a)** and **2(b)**, in the motheye mold **90A**, a porous alumina layer **12a** that has a plurality of very small recessed portions **12p** is provided over the glass substrate **10b**. Note that the aluminum film **10a** is not completely anodized so that there is a remaining aluminum layer **10a'** between the porous alumina layer **12a** and the glass substrate **10b**.

To form an antireflection film which has an excellent antireflection characteristic, the two-dimensional size of the very small recessed portions **12p** of the mold when viewed in a direction normal to the surface of the mold is preferably not less than 10 nm and less than 500 nm, and the distance between recessed portions which are adjacent to each other is preferably not less than 30 nm and less than 600 nm (Patent Documents 1, 2, and 4). As for the dimensions of the very small recessed portions **12p** of the porous alumina layer **12a** which are formed herein, the opening diameter is 100 nm to 200 nm, the depth is 900 nm to 1 µm, and the distance between adjacent recessed portions **12p** is 150 nm to 250 nm.

However, when this fabrication method was applied to a mass-production process, a defect was sometimes produced which may probably be attributed to the aforementioned nonuniform corrosion. Estimating that, in the mass-production process, production of the defect is attributed to immersion of the electrode used for anodization in the etchant without being detached from the aluminum film, the present inventors examined the effects of the electrode material in the etching step.

### < Effects of Electrode Material in Etching Step >

To examine the effects of the electrode material in the etching step, the present inventors conducted the experiment described below.

Anodization was performed on the above-described sample **10** in a 0.6 mass% oxalic aqueous solution at 5°C with an applied voltage at 80 V for 1 minute.

The resultant sample **10** was etched with a 1 mol/L (liter) phosphoric aqueous solution at 30°C for 90 minutes under the two conditions below.

As shown in FIG. **3**, one specimen of the sample **10** was placed on a plastic jig after removal of the electrode used for the anodization and immersed in the etchant **27**. The other specimen of the sample **10** was immersed in the etchant **27** with a plate **22aX** of JIS 1050 aluminum (aluminum purity: 99.50 mass% or higher) being in contact with a surface of the sample **10** which had an aluminum film (anodized layer).

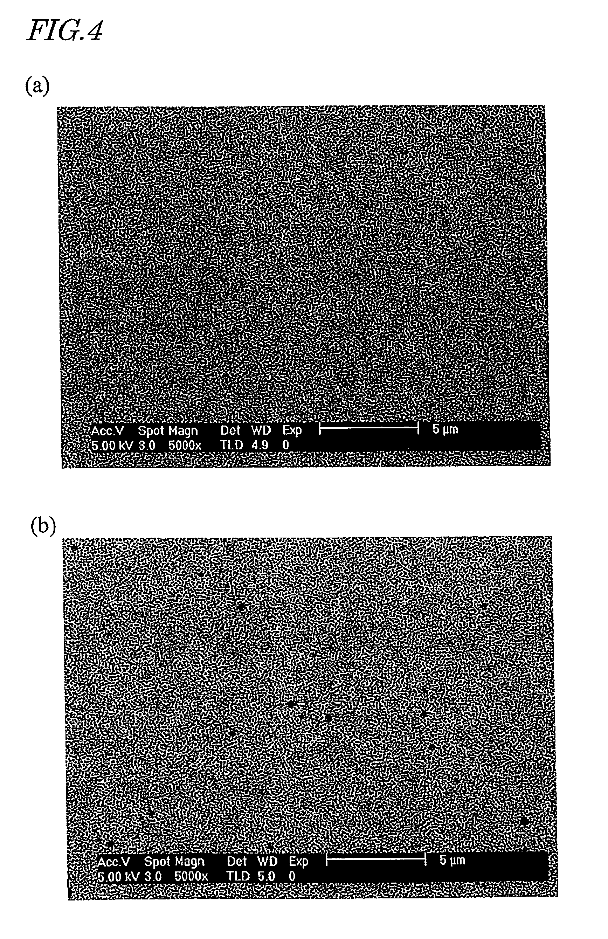

SEM images of the surfaces of resultant anodized porous alumina films are shown in FIGS. **4(a)** and **4(b)**.

In the first specimen of the sample **10** which was placed on the jig after removal of the electrode used for the anodization, an anodized porous alumina film which had no defect as shown in FIG. **4(a)** was obtained. On the other hand, in the second specimen which was etched while being in contact with the JIS 1050 aluminum plate **22aX**, many defects (black spots in the SEM image) were found as shown in FIG. **4(b)**. Thus, it is inferred that, even in the case of a high-purity aluminum film formed by a thin film deposition method, if the aluminum film is exposed to the etchant while being in contact with the JIS 1050 material that contains a large amount of impurities, a cell effect is produced via the etchant.

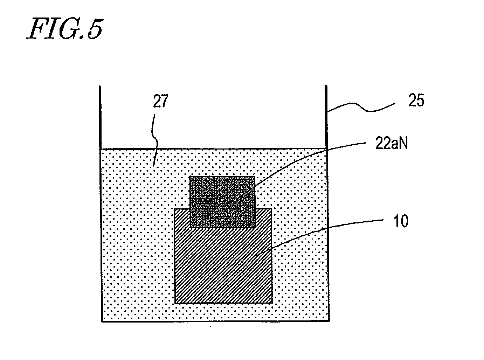

The anodization which was the same as that described above was performed on the same sample **10**, and then, the sample **10** was immersed in the etchant **27** for 90 minutes while being in contact with a 4N aluminum plate **22aN** as shown in FIG. **5**. The etchant used herein was the same as the aforementioned etchant.

No defect was found in the surface of a resultant anodized porous alumina film. The resultant film had an excellent surface as shown in FIG. **4(a)**. It is inferred that, when the aluminum plate **22aN** of high purity, as high as 4N, was brought into contact with the sample, a local cell was not formed because the amount of impurities contained in the aluminum plate **22aN** was small. It is also inferred that the same effect would be obtained even when a metal which has a lower standard electrode potential than aluminum is used because the circuit of a local cell is formed in the opposite direction.

It is understood from the above that, in a motheye mold fabrication method which includes the process of alternately repeating an anodization step and an etching step, production of a defect which is attributed to nonuniform corrosion can be prevented when any of the following conditions is met.

(A) Part of the electrode which is in contact with the surface of the aluminum film in the etchant is kept away from the etchant. To meet this condition, (a1) part of the electrode which is in contact with the surface of the aluminum film is protected by a protection member so as not to be exposed to the etchant, or (a2) part of the electrode which is in contact with the surface of the aluminum film does not exist in the etchant. Thus, in the etchant, the electrode is kept away from the surface of the aluminum film.

(B) Part of the electrode which is in contact with the surface of the aluminum film in the etchant is made of aluminum whose purity is 99.99 mass% or higher or a metal whose standard electrode potential is lower than that of aluminum.

Hereinafter, specific examples which meet the above conditions (A) and/or (B) are described.

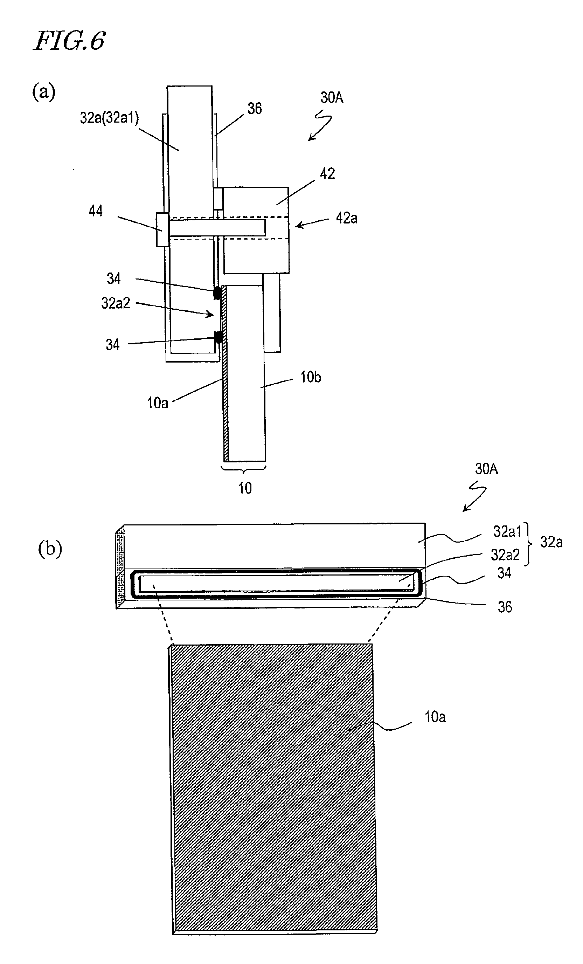

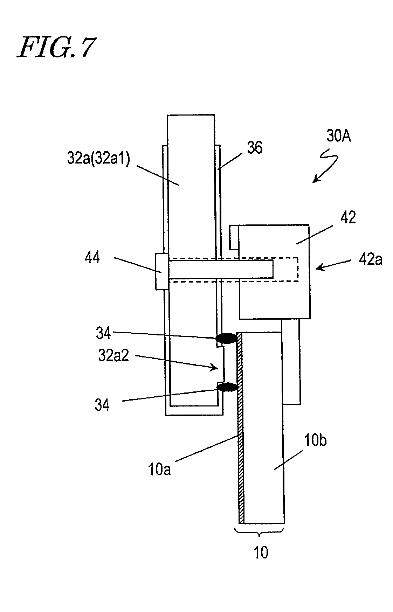

An electrode structure **30A** which is for use in a fabrication method of a motheye mold of an embodiment of the present invention is described with reference to FIGS. **6(a)** and **6(b)** and FIG. **7**. FIG. **6(a)** schematically shows a cross-sectional structure of the electrode structure **30A** (a form of the electrode structure **30A** when used in the anodization step). FIG. **6(b)** is a schematic perspective view which illustrates the relationship between the electrode structure **30A** and the sample (aluminum film **10a**). FIG. **7** is a cross-sectional view showing a form of the electrode structure **30A** when used in the etchant.

The electrode structure **30A** includes, as shown in FIG. **6(a)**, an electrode **32a** and a mechanism of pressing the electrode **32a** against the surface of the aluminum film **10a** of the sample **10**. The electrode **32a** includes a body portion **32a1** and an elevated portion **32a2**. The elevated portion **32a2** is provided on a side of the electrode **32a** which is to come into contact with the aluminum film **10a**. Here, the body portion **32a1** and the elevated portion **32a2** are integrally formed, although the body portion **32a1** and the elevated portion **32a2** may be separate parts. At least the elevated portion **32a2** need to be made of aluminum or a metal whose standard electrode potential is lower than that of aluminum, and the electrode **32a** need to have electrical conductivity. The electrode structure **30A** is provided at the upper edge portion of the sample **10** such that the elevated portion **32a2** is in contact with the surface of the aluminum film **10a** as shown in FIG. **6(b)**.

The mechanism of pressing the elevated portion **32a2** of the electrode **32a** against the aluminum film **10a** includes a jig **42** which is to come into contact with the substrate **10b** of the sample **10** and an externally threaded screw **44** which is to be screwed into an threaded hole (internally threaded hole) **42a** of the jig **42**. The externally threaded screw **44** is passed through a hole in the body portion **32a1** of the electrode **32a** and secured to the threaded hole **42a**.

The electrode structure **30A** further includes a protection member **34** which is arranged to surround the perimeter of the elevated portion **32a2** of the electrode **32a**. The protection member **34** is made of a resilient material which is capable of elastic deformation (e.g., rubber). The protection member **34** may be, for example, an O-ring. FIG. **6(a)** shows a form of the electrode structure **30A** when used in the anodization step, and the protection member **34** shown herein is in a deformed state. However, as shown in FIG. **7**, in the etching step, even when the elevated portion **32a2** is not in contact with the surface of the aluminum film **10a**, the protection member **34** is in contact with the surface of the aluminum film **10a** to tightly close the gap between the surface of the aluminum film **10a** and the elevated portion **32a2**. When the electrode structure **30A** is used, the etching step can be performed with the elevated portion **32a2** of the electrode **32a** being fixed so as to be spaced away from the surface of the aluminum film **10a**.

Part of the electrode **32a** which is to be immersed in the etchant, excluding the elevated portion **32a2**, is provided with a waterproof cover **36**. The waterproof cover **36** may be formed by coating with a resin material. The part of the electrode **32a** which is protected by the waterproof cover **36** may be changed as necessary. Note that the waterproof cover **36** may be omitted.

When the electrode structure **30A** is used, the above condition A is met, and hence, it is not necessary to meet the condition B. However, for safety, the electrode structure **30A** may be arranged to meet the condition B. If a configuration which only meets the condition A is employed, the JIS 1050 material that is less expensive can advantageously be used as the electrode material.

When the elevated portion **32a2** is kept away from the surface of the aluminum film **10a** in the etchant as shown in FIG. **7**, both the above conditions (a1) and (a2) are met. However, even when the elevated portion **32a2** is in contact with the surface of the aluminum film **10a** in the etchant, at least the condition (a1) is met, so that nonuniform corrosion would not occur.

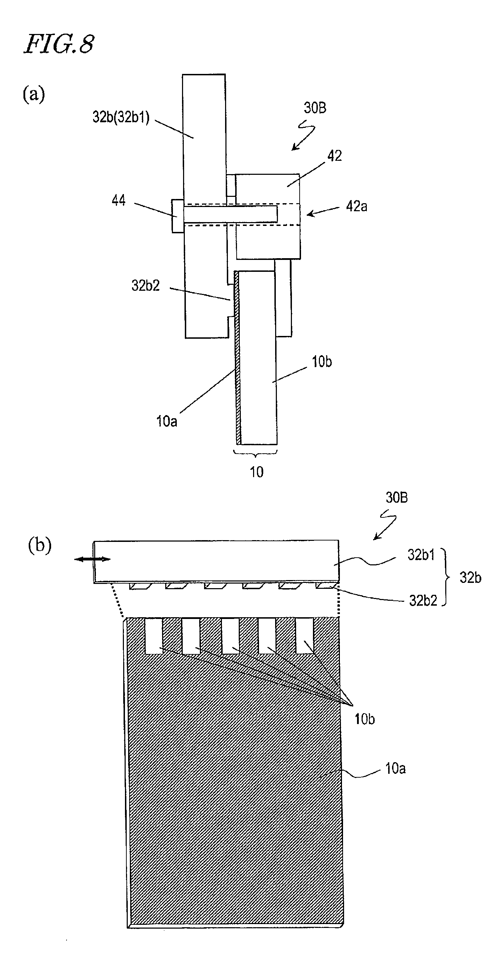

FIG. **8(a)** schematically shows a cross-sectional structure of an electrode structure **30B** which is for use in a fabrication method of a motheye mold according to another embodiment of the present invention. FIG. **8(b)** is a schematic perspective view which illustrates the relationship between the electrode structure **30B** and the sample (aluminum film **10a** and glass substrate **10b**).

The electrode structure **30B** includes an electrode **32b** and a mechanism of pressing the electrode **32b** against the surface of the aluminum film **10a** of the sample **10**. The electrode **32b** includes a body portion **32b1** and a plurality of elevated portions **32b2**. The plurality of elevated portions **32b2** are provided on a side of the electrode **32b** which is to come into contact with the aluminum film **10a**. Here, the body portion **32b1** and the elevated portions **32b2** are integrally formed, although the body portion **32b1** and the elevated portions **32b2** may be separate parts. At least the elevated portions **32b2** need to be made of aluminum or a metal whose standard electrode potential is lower than that of aluminum, and the electrode **32b** need to have electrical conductivity.

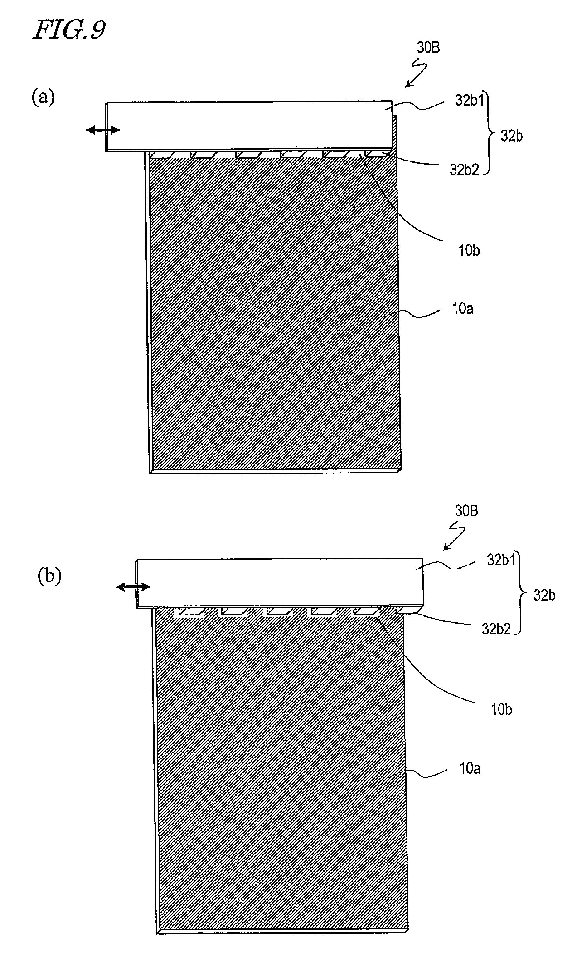

The electrode structure **30B** is provided at the upper edge portion of the sample **10** such that the elevated portions **32b2** are in contact with the surface of the aluminum film **10a** as shown in FIG. **8(b)**. Here, the aluminum film **10a** is deposited using a mask such that the surface of the glass substrate **10b** is partially exposed. In the anodization step, as schematically shown in FIG. **9(a)**, the elevated portions **32b2** of the electrode **32b** are arranged so as to be in contact with the surface of the aluminum film **10a**. Note that the mechanism of pressing the elevated portions **32b2** of the electrode **32b** against the aluminum film **10a** is the same as that of the electrode structure **30A**.

In the etching step, as schematically shown in FIG. **9(b)**, the position of the electrode structure **30B** is slid relative to the sample **10** such that the elevated portions **32b2** of the electrode **32b** come into contact with the exposed part of the surface of the glass substrate **10b**. The sliding mechanism used herein may be any of the known sliding mechanisms.

When the electrode structure **30B** is used, (a2) of the above condition A is met, and hence, it is not necessary to meet the condition B. However, for safety, the electrode structure **30B** may be arranged to meet the condition B. If a configuration which only meets the condition A is employed, the JIS 1050 material that is less expensive can advantageously be used as the electrode material. Note that, when the JIS 1050 material is used, part of the electrode which would otherwise be exposed to the etchant is preferably provided with a waterproof cover as in the electrode structure **30A**.

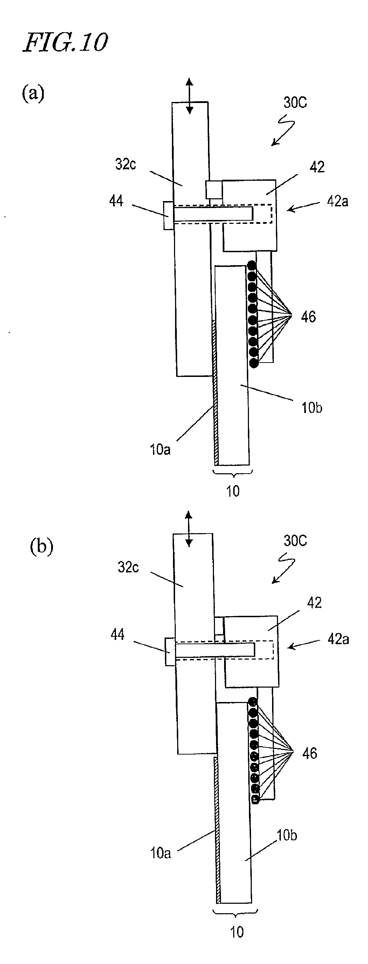

Alternatively, an electrode structure **30C** shown in FIGS. **10(a)** and **10 (b)** may be used. FIG. **10(a)** is a schematic cross-sectional view showing a form of the electrode structure **30C** when used in the anodization step. FIG. **10(b)** is a schematic cross-sectional view showing a form of the electrode structure **30C** when used in the etching step.

The electrode structure **30C** includes an electrode **32c** which is made of aluminum or a metal whose standard electrode potential is lower than that of aluminum. The mechanism of pressing the electrode **32c** against the aluminum film **10a** includes a jig **42** which is to come into contact with the substrate **10b** of the sample **10** and an externally threaded screw **44** which is to be screwed into an threaded hole (internally threaded hole) **42a** of the jig **42**. The externally threaded screw **44** is passed through a hole in the electrode **32c** and secured to the threaded hole **42a**. The electrode structure **30C** includes rollers **46** on a surface of the jig **42** which is to come into contact with the substrate **10b** and is configured such that the electrode is vertically slidable relative to the sample **10**.

When the electrode structure **30C** is used, the upper edge portion of the sample **10** is not provided with the aluminum film **10a** such that the surface of the glass substrate **10b** is exposed as shown. In the anodization step, the electrode **32c** is arranged so as to be in contact with the surface of the aluminum film **10a**. In the etching step, the electrode **32c** is arranged so as to be in contact with the surface of the glass substrate **10b**.

When the electrode structure **30C** is used, (a2) of the above condition A is met as in the case of the electrode structure **30B**, and hence, it is not necessary to meet the condition B. However, for safety, the electrode structure **30C** may be arranged to meet the condition B. If a configuration which only meets the condition A is employed, the JIS 1050 material that is less expensive can advantageously be used as the electrode material. Note that, when the JIS 1050 material is used, part of the electrode which would otherwise be exposed to the etchant is preferably provided with a waterproof cover as in the electrode structure **30A**.

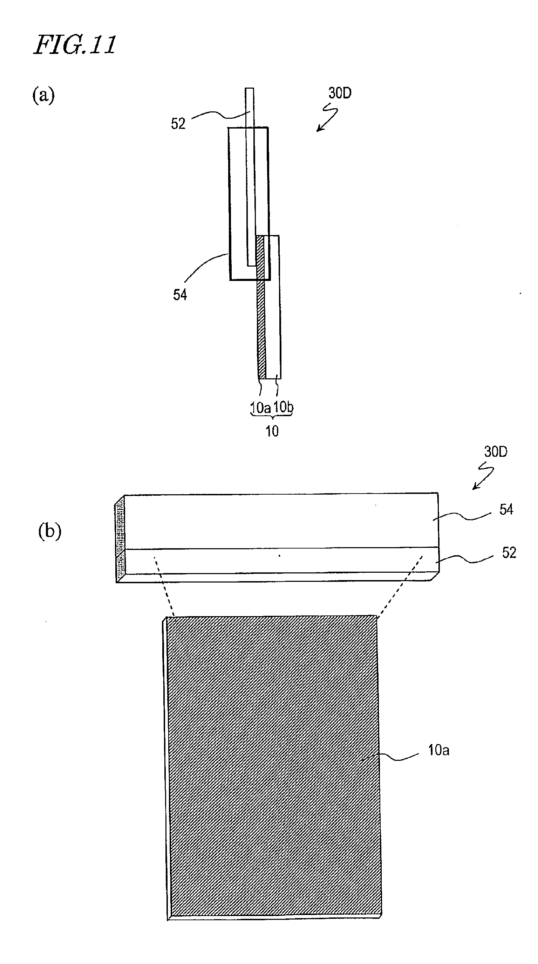

Next, electrode structures **30D**, **30E**, and **30F** are described with reference to FIG. **11** to FIG. **13**, where part of the electrode which is in contact with the aluminum film **10a** is made of aluminum with a purity of 99.99 mass% or higher. Thus, the electrode structures **30D** to **30F** described below meet the above condition B. Note that a metal whose standard electrode potential is lower than that of aluminum may be used instead of the high-purity aluminum.

High-purity aluminum of 4N or higher is so soft that it is difficult to process into an electrode. Therefore, to increase the strength of high-purity aluminum, it is preferred to employ a configuration which will be described below.

For example, as in the electrode structure **30D** whose cross-sectional structure is schematically shown in FIG. **11(a)**, an electrode **52** which is made of high-purity aluminum may be reinforced with a reinforcement member **54** which is made of, for example, a resin material. As schematically shown in FIG. **11(b)**, the electrode structure **30D** is arranged such that the electrode **52** comes into contact with the surface of the aluminum film **10a** of the sample **10** as in the electrode structures **30A** to **30C** which have been previously described.

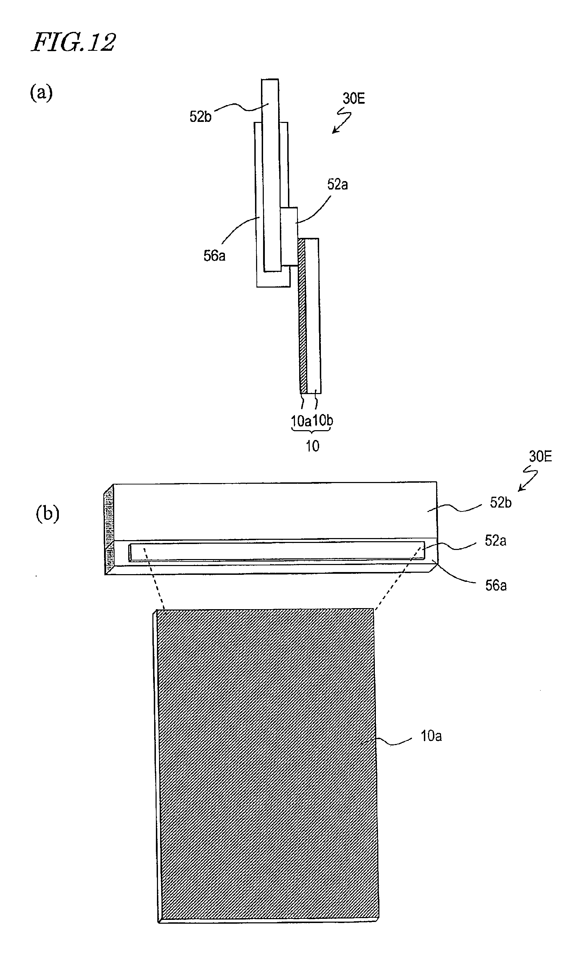

Alternatively, as in the electrode structure **30E** whose cross-sectional structure is schematically shown in FIG. **12**(**a**), the electrode structure may be divided into an elevated portion **52a** which is made of high-purity aluminum and a body portion **52b** which is made of the JIS 1050 material, and the elevated portion **52a** may be reinforced with the body portion **52b**. Here, at least part of the body portion **52b** that is made of aluminum of a lower purity than that of the aluminum film **10a**, which would otherwise be exposed to the etchant, is preferably protected by a waterproof cover **56a**. The waterproof cover **56a** may be made of a resin. As schematically shown in FIG. **12(b)**, the electrode structure **30E** is arranged such that the elevated portion **52a** of the electrode comes into contact with the surface of the aluminum film **10a** of the sample **10** as in the electrode structures **30A** to **30D** which have been previously described.

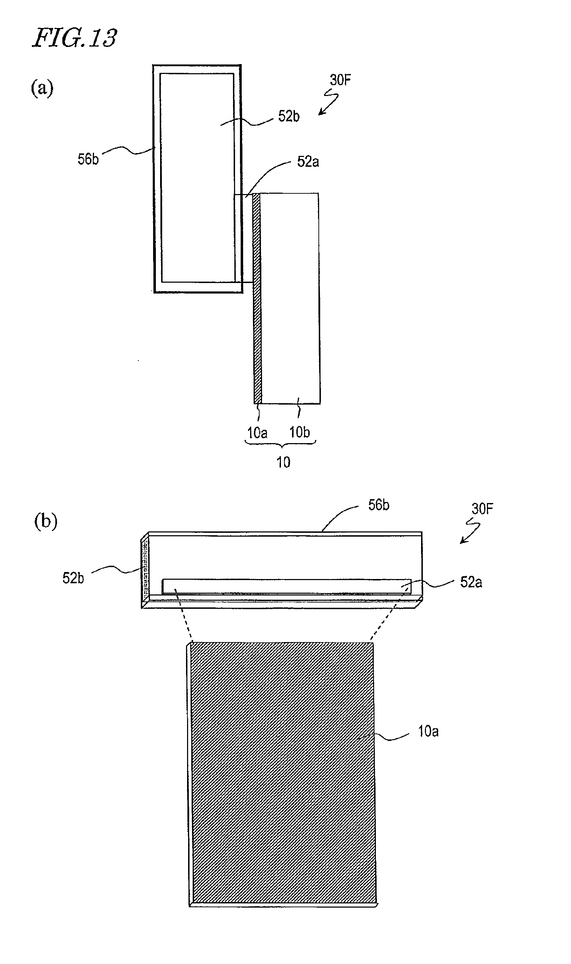

Likewise, the electrode structure **30F** whose cross-sectional structure is schematically shown in FIG. **13(a)** may be employed. The electrode structure **30F** may include an elevated portion **52a** which is made of high-purity aluminum and a body portion **52b** which is made of the JIS 1050 material as does the electrode structure **30E**. Exposed part of the surface of the body portion **52b** that is made of aluminum of a lower purity than that of the aluminum film **10a** is entirely covered with a resin coating **56b**. As schematically shown in FIG. **13(b)**, the electrode structure **30F** is arranged such that the elevated portion **52a** of the electrode comes into contact with the surface of the aluminum film **10a** of the sample **10** as in the electrode structures **30A** to **30E** which have been previously described.

### INDUSTRIAL APPLICABILITY

The present invention is widely applicable to the method of fabricating a motheye mold. A mold which is fabricated based on the fabrication method of the present invention is widely applicable to formation of a surface in which nanometer-scale unevenness is demanded, typically such as formation of an antireflection film.

### REFERENCE SIGNS LIST

- **10**: sample
- **10a**: aluminum film
- **10a'**: residual aluminum layer
- **10b**: base (glass substrate)
- **12a**: porous alumina layer
- **12p**: recessed portion
- **24, 25**: container
- **26**: electrolytic solution
- **27**: etchant
- **30A, 30B, 30C, 30D, 30E, 30F**: electrode structure
- **32a**: electrode
- **32a1**: body portion of electrode
- **32a2**: elevated portion of electrode
- **36**: waterproof cover
- **42**: jig
- **42a**: threaded hole (internally threaded hole)
- **44**: externally threaded screw
- **90A**: motheye mold

## Claims

1. A method of fabricating a mold (90A) that has an inverted motheye structure in its surface, the inverted motheye structure having a plurality of recessed portions (12p) whose two-dimensional size viewed in a direction normal to the surface is not less than 10 nm and less than 500 nm, the method comprising the steps of:
(a) anodizing a surface of an aluminum film (10a) or aluminum base via an electrode (32a) that is in contact with the surface, thereby forming a porous alumina layer (12a) which has a plurality of very small recessed portions (12p);
(b) after step (a), allowing the porous alumina layer (12a) to be in contact with an etchant (27), thereby enlarging the plurality of very small recessed portions (12p) of the porous alumina layer (12a); and
(c) after step (b), further anodizing the surface via the electrode (32a) to grow the plurality of very small recessed portions (12p),
wherein the electrode is made of aluminum which has a lower purity than the aluminum film or the aluminum base,
wherein the aluminum film or the aluminum base has a purity not less than 99,99 mass %, and
wherein step (b) is performed in such a controlled state that part (32a2) of the electrode (32a) in the etchant which is in contact with the surface in step (a) is placed in the etchant and is not exposed to the etchant by being protected by a protection member (34).

2. The method of claim 1,
wherein step (b) is performed with the electrode (32a) being fixed in the etchant so as not to come into contact with the surface.

3. The method of claim 2, wherein
step (a) is performed with part (32a2) of the electrode (32a) which is in contact with the surface being protected by the protection member (34) so as not to be exposed to an electrolytic solution, and
step (b) is performed with the part (32a) of the electrode (32a) which is protected so as not to be exposed to the electrolytic solution in step (a) being placed in the etchant and fixed so as to be spaced away from the surface.

## Patentansprüche

1. Verfahren zum Herstellen einer Form (90A), die eine invertierte Mottenaugenstruktur in ihrer Oberfläche aufweist, wobei die invertierte Mottenaugenstruktur eine Mehrzahl an ausgesparten Teilen (12p) aufweist, deren zweidimensionale Größe, in einer Richtung senkrecht zur Oberfläche betrachtet, nicht geringer als 10 nm und geringer als 500 nm ist, wobei das Verfahren die Schritte aufweist:
(a) Anodisieren einer Oberfläche eines Aluminiumfilms (10a) oder einer Aluminiumbasis über eine Elektrode (32a), die mit der Oberfläche in Kontakt steht, dadurch eine poröse Aluminiumoxidschicht (12a) bildend, die eine Mehrzahl an sehr kleinen ausgesparten Teilen (12p) aufweist;
(b) nach Schritt (a), Zulassen, dass die poröse Aluminiumoxidschicht (12a) mit einem Ätzmittel (27) in Kontakt steht, dadurch die Mehrzahl an sehr kleinen ausgesparten Teilen (12p) der porösen Aluminiumoxidschicht (12a) vergrößernd; und
(c) nach Schritt (b), weiteres Anodisieren der Oberfläche über die Elektrode (32a), um die Mehrzahl an sehr kleinen ausgesparten Teilen (12p) wachsen zu lassen,
wobei die Elektrode aus Aluminium besteht, welches eine geringere Reinheit als der Aluminiumfilm oder die Aluminiumbasis hat,
wobei der Aluminiumfilm oder die Aluminiumbasis eine Reinheit nicht geringer als 99,99 Masse-% hat, und
wobei Schritt (b) in solch einem kontrollierten Zustand durchgeführt wird, dass ein Teil (32a2) der Elektrode (32a) im Ätzmittel, welcher in Schritt (a) mit der Oberfläche in Kontakt steht, im Ätzmittel platziert und, indem er durch ein Schutzelement (34) geschützt wird, dem Ätzmittel nicht ausgesetzt ist.

2. Verfahren nach Anspruch 1,
wobei Schritt (b) durchgeführt wird, wobei die Elektrode (32a) im Ätzmittel befestigt ist, um mit der Oberfläche nicht in Kontakt zu kommen.

3. Verfahren nach Anspruch 2, wobei
Schritt (a) durchgeführt wird, wobei Teil (32a2) der Elektrode (32a), der mit der Oberfläche in Kontakt steht, durch das Schutzelement (34) geschützt ist, so dass er einer elektrolytischen Lösung nicht ausgesetzt ist, und
Schritt (b) durchgeführt wird, wobei der Teil (32a) der Elektrode (32a), der geschützt ist, so dass er der elektrolytischen Lösung in Schritt (a) nicht ausgesetzt ist, im Ätzmittel platziert und befestigt ist, so dass er von der Oberfläche beabstandet ist.

## Revendications

1. Procédé de fabrication d'un moule (90A) qui présente dans sa surface une structure moth-eye inversée présentant plusieurs parties en creux (12p) dont la taille en deux dimensions, vue dans une direction normale par rapport à la surface, est non inférieure à 10 nm et inférieure à 500 nm, le procédé comprenant les étapes qui consistent :
(a) à anodiser une surface d'un film d'aluminium (10a) ou d'une base d'aluminium par l'intermédiaire d'une électrode (32a) qui est en contact avec la surface, ce qui forme une couche d'alumine poreuse (12a) qui présente plusieurs très petites parties en creux (12p) ;
(b) après l'étape (a), à permettre à la couche d'alumine poreuse (12a) d'être en contact avec un agent d'attaque (27), ce qui agrandit les très petites parties en creux (12p) de la couche d'alumine poreuse (12a) ; et
(c) après l'étape (b), à anodiser encore la surface par l'intermédiaire de l'électrode (32a) pour augmenter les très petites parties en creux (12p),
étant précisé que l'électrode se compose d'aluminium qui a une plus faible pureté que le film d'aluminium ou la base d'aluminium,
que le film d'aluminium ou la base d'aluminium présente une pureté non inférieure à 99,99 % en masse, et
que l'étape (b) est réalisée dans un état contrôlé tel qu'une partie (32a2) de l'électrode (32) située dans l'agent d'attaque qui est en contact avec la surface lors de l'étape (a) est placée dans ledit agent d'attaque et n'est pas exposée à celui-ci, en étant protégée par un élément de protection (34).

2. Procédé de la revendication 1, étant précisé que l'étape (b) est réalisée avec l'électrode (32a) fixée dans l'agent d'attaque de manière à ne pas venir en contact avec la surface.

3. Procédé de la revendication 2, étant précisé
que l'étape (a) est réalisée alors qu'une partie (32a2) de l'électrode (32a) qui est en contact avec la surface est protégée par l'élément de protection (34) de manière à ne pas être exposée à une solution électrolytique, et
que l'étape (b) est réalisée alors que la partie (32a) de l'électrode (32a) qui est protégée de manière à ne pas être exposée à la solution électrolytique lors de l'étape (a) est placée dans l'agent d'attaque et est fixée de manière à être espacée de la surface.
